# FASCICULE DE BREVET EUROPEEN

(11) **EP 2 187 066 B1**
(45) Date de publication et mention de la délivrance du brevet: **23.04.2014**
(21) Numéro de dépôt: 09306055.6
(22) Date de dépôt: 04.11.2009
(51) Int. Cl.: F15B 15/20, F15B 20/00, F16K 17/16

(54) **Actionneur hydraulique comportant un dispositif de protection**
Hydraulischer Stellantrieb mit Schutzvorrichtung
Hydraulic actuator with protection device

(30) Priorité: 06.11.2008 FR 0857536
(43) Date de publication de la demande: 19.05.2010
(73) Titulaire: Afhymat, 80700 Roye (FR)
(72) Inventeur: Koziarek, Jean, 60400, CRISOLLES (FR)
(74) Mandataire: Laget, Jean-Loup

(56) Documents cités:
- EP-A- 0 264 574
- WO-A-2008/021946
- DE-C- 907 118
- FR-A- 2 121 951
- FR-A- 2 289 824

## Description

L'invention est relative à un actionneur hydraulique, notamment un vérin hydraulique, comportant un dispositif de protection contre les surpressions.

On connaît des vérins hydrauliques télescopiques fabriqués par la société AFHYMAT de droit français. Ces vérins hydrauliques télescopiques sont généralement destinés à l'équipement de véhicules industriels, par exemple à l'équipement de bennes basculantes.

Ces vérins hydrauliques sont généralement conçus pour une pression de service déterminée et pour une pression maximale admissible, de manière à permettre une utilisation sûre et ergonomique, sans risque d'accident.

Cependant, lors de l'utilisation de machines industrielles, en particulier de matériels de manutention et de transport sur les chantiers, il existe le risque de dépasser la pression maximale admissible et d'entraîner des accidents matériels ou corporels.

L'invention a pour but de remédier aux inconvénients de l'état de la technique connu, en proposant un nouvel actionneur hydraulique comportant un dispositif de protection, permettant à la fois de protéger l'actionneur hydraulique contre la surpression et permettant de détecter un dépassement de la pression maximale admissible, même après l'arrêt de la machine ou de l'équipement industriel auquel le dispositif est destiné.

L'invention a pour objet un actionneur hydraulique, notamment un vérin hydraulique, comportant un dispositif de protection avec des moyens de raccordement au fluide hydraulique d'actionnement et un moyen à changement d'état permettant l'indication instantanée du dépassement d'une pression maximale admissible de l'actionneur hydraulique, et assurant simultanément la limitation de la pression de fonctionnement de l'actionneur hydraulique.

Selon d'autres caractéristiques alternatives de l'invention :
- les moyens de raccordement au fluide hydraulique d'actionnement sont constitués par une pièce de raccordement à un élément de l'actionneur hydraulique et une pièce de fermeture de ladite pièce de raccordement ;
- le moyen à changement d'état comporte au moins un disque de rupture destiné à être rompu lors du dépassement d'une pression maximale admissible prédéterminée ;
- les moyens de raccordement au fluide hydraulique d'actionnement peuvent comporter une pièce présentant des orifices de communication avec le fluide hydraulique d'actionnement ;
- les moyens de raccordement au fluide hydraulique d'actionnement peuvent comporter une pièce présentant des orifices de communication avec l'atmosphère ;
- l'actionneur peut comporter un moyen indicateur de dépassement d'une pression maximale admissible pour l'actionneur hydraulique;
- l'actionneur peut comporter un moyen de raccordement à un piston de l'actionneur hydraulique;
- l'actionneur peut comporter un moyen de raccordement à une partie en communication avec un orifice d'admission du fluide hydraulique d'actionnement.
- ledit actionneur hydraulique selon l'invention peut avantageusement être un actionneur télescopique.

L'invention a également pour objet un dispositif pour actionneur hydraulique selon l'invention.

L'invention sera mieux comprise grâce à la description qui va suivre, donnée à titre d'exemple non limitatif en référence aux dessins annexés, dans lesquels :
La figure 1 représente schématiquement une vue en perspective avec coupe partielle d'un actionneur hydraulique selon l'invention.
La figure 2 représente schématiquement une vue partielle agrandie en coupe selon le repère II de la figure 1 d'un premier mode de représentation d'un actionneur selon l'invention, en mode de fonctionnement normal.
La figure 3 représente schématiquement une vue en coupe du actionneur de la figure 2, en mode de fonctionnement après avoir subi un dépassement de la pression maximale admissible.
La figure 4 représente schématiquement une vue partielle agrandie en coupe selon le repère IV de la figure 1 d'un deuxième mode de réalisation d'un actionneur selon l'invention, en mode de fonctionnement normal.
La figure 5 représente schématiquement une vue en coupe d'un actionneur de la figure 4, en mode de fonctionnement après avoir subi un dépassement de la pression maximale admissible.

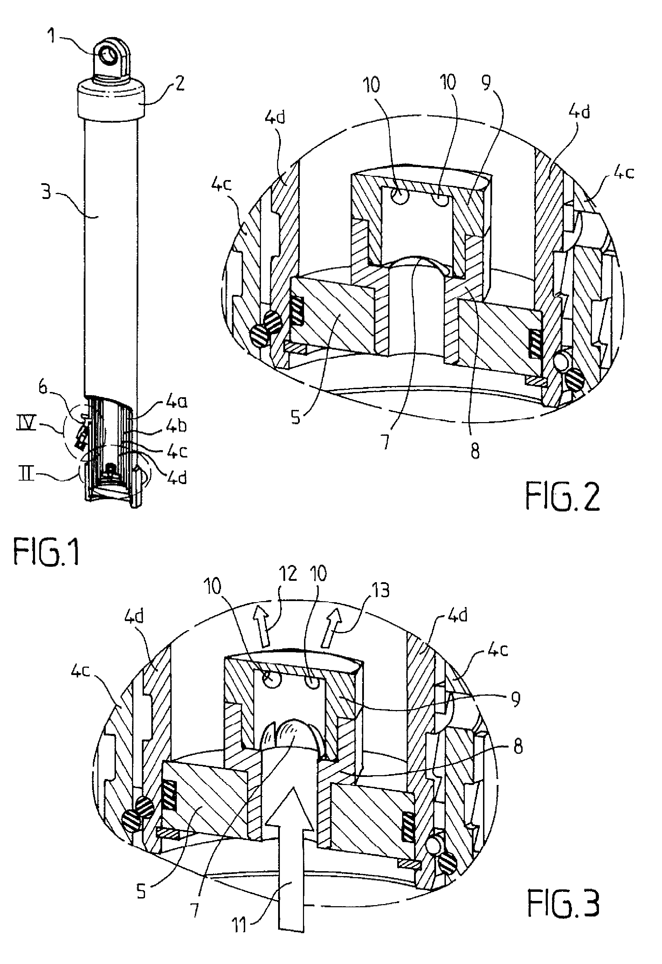

En référence aux figures 1 à 5, les éléments identiques ou fonctionnellement équivalents sont repérés par des chiffres de référence identiques.

Sur la figure 1, un actionneur hydraulique selon l'invention comporte un oeillet 1 de fixation solidaire d'un chapeau 2 fixé sur un corps 3. Le corps 3 constitue la chemise extérieure de l'actionneur hydraulique et contient une pluralité de cylindres 4a, 4b, 4c, 4d communiquant entre eux par des orifices appropriés.

La chemise 4d radialement la plus intérieure porte à demeure un piston 5 muni d'un premier dispositif selon l'invention.

Le corps 3 ou chemise radialement la plus extérieure présente un orifice d'alimentation 6 raccordé obliquement à un deuxième dispositif selon l'invention.

L'orifice 6 d'alimentation permet la mise en pression successive des volumes délimités par les chemises intérieures au corps 3 et l'allongement du vérin télescopique.

Sur la figure 2, un premier mode de réalisation d'un actionneur selon l'invention est monté à demeure sur le piston 5, en étant par exemple vissé dans un alésage central du piston 5.

Cet actionneur selon l'invention comporte un disque de rupture 7 taré à une pression déterminée inférieure à la pression maximale admissible de service de l'actionneur hydraulique.

Le disque de rupture 7 est monté prisonnier entre une pièce 8 de liaison au piston 5 et un chapeau 9 présentant plusieurs orifices 10 de passage.

Dans la position de la figure 2, le dispositif de protection selon l'invention assure une fonction de protection contre les dépassements de pression, du fait que le disque de rupture ne permet pas une montée en pression au-dessus de la pression maximale admissible pour l'actionneur hydraulique auquel le dispositif est destiné.

Sur la figure 3, le dispositif selon l'invention représenté à la figure 2 a subi un dépassement de pression au-delà de la pression maximale admissible pour l'actionneur hydraulique.

Ce dépassement de pression au-delà de la pression maximale admissible a provoqué la rupture du disque 7, de sorte que le fluide hydraulique sous pression s'écoule à travers le passage libéré par l'éclatement du disque de rupture selon un débit hydraulique schématisé par la flèche 11.

Le débit hydraulique schématisé par la flèche 11 se répartit à l'intérieur de la pièce ou chapeau 9 et s'écoule à travers les orifices 10 selon des débits partiels schématisés par les flèches 12 et 13.

L'écoulement hydraulique entre deux chambres du vérin hydraulique empêche ainsi la montée en pression et le dépassement de la pression maximale admissible de service de l'actionneur hydraulique.

L'invention n'est pas limitée au dispositif décrit en référence aux figures 1 à 3, mais s'étend également à tout dispositif indicateur à changement d'état en cas de dépassement d'une pression maximale admissible d'un actionneur hydraulique.

Avantageusement, les dispositifs selon l'invention permettent également de limiter la pression après un changement d'état.

A cet effet, le changement d'état permet un écoulement d'un fluide hydraulique destiné à empêcher la montée en pression, ou est associé à une soupape ou à un autre moyen d'évacuation d'une surpression.

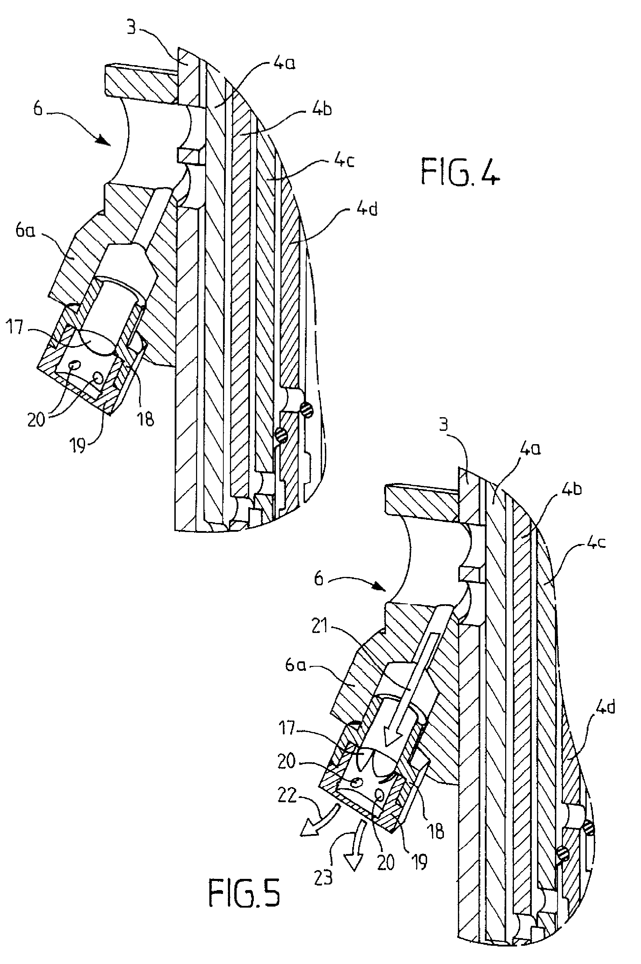

Sur les figures 4 et 5, un deuxième dispositif selon l'invention est vissé dans une dérivation latérale 6a du conduit 6 d'alimentation du vérin. Le deuxième dispositif selon l'invention comporte avantageusement un disque de rupture 17 ou moyen équivalent à changement d'état en cas de dépassement d'une pression de tarage prédéterminée, un raccord inférieur 18 vissé dans la dérivation 6a et un chapeau 19 de montage du disque 17 de rupture.

Le chapeau 19 peut avantageusement être muni d'orifices 20 d'évacuation de fluide hydraulique, ou d'une fenêtre ou oeilleton non représenté permettant de distinguer l'entrée du fluide hydraulique à l'intérieur de la chambre délimitée par le chapeau 19 et le disque de rupture 17.

Dans le mode de réalisation représenté aux figures 4 et 5, les orifices 20 disposés vers l'extérieur permettent immédiatement de constater une fuite hydraulique révélatrice de la rupture du disque 17.

Un autre moyen indicateur à contact électrique, à contact à pression, ou tout autre moyen permettant de signaler la rupture du disque 17, peut également être utilisé sans sortir du cadre de la présente invention.

Sur la figure 5, le disque de rupture a été rompu par un dépassement de la pression maximale admissible de service. La rupture du disque 17 permet l'écoulement du fluide hydraulique dans le sens de la flèche 21, et autorise ensuite l'écoulement à l'atmosphère à travers les orifices 20 par des débits répartis symbolisés par les flèches 22 et 23.

Ainsi, grâce à l'invention, le dépassement de pression au-delà de la pression maximale admissible prédéterminée du fluide hydraulique est immédiatement indiqué à un opérateur ou à un utilisateur de l'actionneur hydraulique, et ceci de manière permanente, tout en permettant simultanément de limiter la pression à la pression correspondant à la rupture du disque ou moyen équivalent à changement d'état.

L'invention décrite en référence à deux modes de réalisation particuliers n'y est nullement limitée, mais couvre au contraire toute modification de forme et toute variante de réalisation dans le cadre et l'esprit de l'invention.

## Revendications

1. Actionneur hydraulique, notamment vérin hydraulique, comportant un dispositif de protection avec des moyens (8, 9, 18, 19) de raccordement au fluide hydraulique d'actionnement et un moyen (7, 17) à changement d'état comportant au moins un disque de rupture (7, 17) destiné à être rompu lors du dépassement d'une pression maximale admissible prédéterminée et assurant la limitation de la pression de fonctionnement de l'actionneur hydraulique.

2. Actionneur hydraulique selon la revendication 1, dans lequel les moyens de raccordement au fluide hydraulique d'actionnement sont constitués par une pièce (8, 18) de raccordement à un élément de l'actionneur hydraulique et une pièce (9, 19) de fermeture de ladite pièce de raccordement (8, 18).

3. Actionneur hydraulique selon la revendication 1 ou la revendication 2, **caractérisé en ce que** les moyens de raccordement au fluide hydraulique d'actionnement comportent une pièce (9) présentant des orifices (10) de communication avec le fluide hydraulique d'actionnement.

4. Actionneur hydraulique selon l'une quelconque des revendications précédentes, **caractérisé par le fait que** les moyens de raccordement au fluide hydraulique d'actionnement comportent une pièce (19) comportant des orifices de communication avec l'atmosphère.

5. Actionneur hydraulique selon l'une quelconque des revendications 1 à 3, dans lequel le dispositif comporte un moyen (8) de raccordement à un piston (5) de l'actionneur hydraulique,

6. Actionneur hydraulique selon l'une quelconque des revendications précédentes, dans lequel le dispositif comporte un moyen (18) de raccordement à une partie (6a) en communication avec un orifice (6) d'admission du fluide hydraulique d'actionnement.

7. Actionneur hydraulique selon l'une quelconque des revendications 1 à 6, notamment vérin hydraulique, **caractérisé par le fait que** l'actionneur hydraulique est un actionneur télescopique.

## Patentansprüche

1. Hydraulischer Stellantrieb, insbesondere hydraulischer Zylinder, der eine Schutzvorrichtung mit Mitteln (8, 9, 18, 19) zum Anschließen an die Betätigungshydraulikflüssigkeit und ein Mittel (7, 17) mit Zustandswechsel aufweist, das mindestens eine Berstscheibe (7, 17) aufweist, die dazu bestimmt ist, beim Überschreiten eines vorbestimmten zulässigen maximalen Druck zu brechen und die Einschränkung des Betriebsdrucks des hydraulischen Stellantriebs sicherzustellen.

2. Hydraulischer Stellantrieb nach Anspruch 1, bei dem die Mittel zum Anschließen an die Betätigungshydraulikflüssigkeit aus einem Teil (8, 18) zum Anschließen an ein hydraulisches Stellantriebselement und einem Teil (9, 19) zum Schließen des Anschlussteils (8, 18) bestehen.

3. Hydraulischer Stellantrieb nach Anspruch 1 oder Anspruch 2, **dadurch gekennzeichnet, dass** die Mittel zum Anschließen an die Betätigungshydraulikflüssigkeit ein Teil (9) aufweisen, das Öffnungen (10) zur Kommunikation mit der Betätigungshydraulikflüssigkeit aufweist.

4. Hydraulischer Stellantrieb nach einem der vorhergehenden Ansprüche, **dadurch gekennzeichnet, dass** die Mittel zum Anschließen an die Betätigungshydraulikflüssigkeit ein Teil (19) aufweisen, das Öffnungen zur Kommunikation mit der Umgebung aufweist.

5. Hydraulischer Stellantrieb nach einem der Ansprüche 1 bis 3, bei dem die Vorrichtung ein Mittel (8) zum Anschließen an einen Kolben (5) des hydraulischen Stellantriebs aufweist.

6. Hydraulischer Stellantrieb nach einem der vorhergehenden Ansprüche, bei dem die Vorrichtung ein Mittel (18) zum Anschließen an einen Teil (6a) in Verbindung mit einer Einlassöffnung (6) der Betätigungshydraulikflüssigkeit aufweist.

7. Hydraulischer Stellantrieb nach einem der Ansprüche 1 bis 6, insbesondere hydraulischer Zylinder, **dadurch gekennzeichnet, dass** der hydraulische Stellantrieb ein teleskopischer Stellantrieb ist.

## Claims

1. Hydraulic actuator, notably hydraulic ram, comprising a protection device with means (8, 9, 18, 19) of connection to the actuating hydraulic fluid and a state-change means (7, 17) comprising at least one rupture disc (7, 17) intended to be ruptured if a predetermined permissible maximum pressure is exceeded and limiting the operating pressure of the hydraulic actuator.

2. Hydraulic actuator according to Claim 1, in which the means of connection to the actuating hydraulic fluid consist of a piece (8, 18) for connection to an element of the hydraulic actuator and a closure piece (9, 19) for closing said connection piece (8, 18).

3. Hydraulic actuator according to Claim 1 or Claim 2, **characterized in that** the means of connection to the actuating hydraulic fluid comprise a piece (9) having orifices (10) for communication with the actuating hydraulic fluid.

4. Hydraulic actuator according to any one of the preceding claim, **characterized in that** the means of connection to the actuating hydraulic fluid comprise a piece (19) comprising orifice communicating with the atmosphere.

5. Hydraulic actuator according to any one of Claims 1 to 3, in which the device comprises a means (8) of connection to a piston (5) of the hydraulic actuator.

6. Hydraulic actuator according to any one of the preceding claims, in which the device comprises a means (18) of connection to a part (6a) in communication with an actuating hydraulic fluid inlet orifice (6).

7. Hydraulic actuator according to any one of Claims 1 to 6, notably hydraulic ram, **characterized in that** the hydraulic actuator is a telescopic actuator.
